# EUROPEAN PATENT SPECIFICATION

(11) **EP 4 087 034 B1**
(45) Date of publication and mention of the grant of the patent: **23.09.2026**
(21) Application number: 22739765.0
(22) Date of filing: 14.01.2022
(51) Int. Cl.: H01M 50/167, H01M 50/152, H01M 50/186, B21D 51/32, B21D 51/26, H01M 10/04, H01M 50/107

(54) **CYLINDRICAL SECONDARY BATTERY CELL PRODUCTION APPARATUS AND METHOD**
VORRICHTUNG UND VERFAHREN ZUM PRODUZIEREN EINER ZYLINDRISCHEN SEKUNDÄRBATTERIEZELLE
APPAREIL ET PROCÉDÉ DE PRODUCTION D'ÉLÉMENT DE BATTERIE SECONDAIRE CYLINDRIQUE

(30) Priority: 14.01.2021 KR 20210005503; 16.11.2021 KR 20210158065
(43) Date of publication of application: 09.11.2022
(73) Proprietor: LG Energy Solution, Ltd., Seoul 07335 (KR)
(72) Inventor: LEE, Jun-Oh, Daejeon 34122 (KR); SHIM, Kyu-Hun, Daejeon 34122 (KR); LEE, Seung-Tae, Daejeon 34122 (KR)
(74) Representative: Goddar, Heinz J.
(86) International application number: PCT/KR2022/000733
(87) International publication number: WO 2022/154573

(56) References cited:
- EP-A1- 2 800 162
- CN-A- 108 054 305
- CN-A- 108 054 305
- CN-U- 205 863 230
- JP-A- H09 293 529
- KR-A- 19980 037 988
- KR-A- 20180 108 180
- US-A- 3 837 206
- US-A- 4 656 736
- US-A1- 2009 151 863
- US-A1- 2012 094 169

## Description

### TECHNICAL FIELD

The present application claims priority to Korean Patent Application Nos. 10-2021-0005503 and 10-2021-0158065 respectively filed on January 14, 2021 and November 16, 2021 in the Republic of Korea.

The present disclosure relates to a cylindrical secondary battery cell production apparatus and method, and more particularly, to a cylindrical secondary battery cell production apparatus and method in which a crimping portion is easily formed.

### BACKGROUND ART

US 4,656,736 A relates to equipment associated with mechanized sealing cylindrical storage cells, and more particularly to an apparatus for sealing a cylindrical storage cell.

US 2009/151863 A1 relates to a method for manufacturing a cylindrical battery and a device used for the same, and in particular, relates to a manufacturing method for carrying out groove-forming processing on a battery case in the shape of a cylinder with a bottom and a groove-forming processing device.

CN 108 054305 A relates to a cylindrical lithium battery processing equipment, and in particular to a cylindrical lithium battery sealing device.

US 2012/094169 A1 relates to a secondary battery.

EP 2 800 162 A1 relates to cylindrical alkaline storage batteries and to a sealing structure of a sealing portion where the opening of an outer can is sealed.

US 3,837,206 A relates to an apparats for crimping battery casings in which battery casings are held within the cylindrical bore of a reciprocable holder while being crimped.

As the development and demand for mobile devices has increased, the demand for secondary batteries as energy sources has rapidly increased. Nickel cadmium batteries or hydrogen ion batteries have been used as conventional secondary batteries, but recently, lithium secondary batteries having little memory effect compared to nickel-based secondary batteries, free charging and discharging, a very low self-discharge rate, and high energy density have been widely used.

A lithium secondary battery mainly uses a lithium-based oxide and a carbon material as a positive electrode active material and a negative electrode active material, respectively. A lithium secondary battery includes an electrode assembly in which a positive electrode plate and a negative electrode plate to which a positive electrode active material and a negative electrode active material are respectively applied are located with a separator therebetween, and a casing in which the electrode assembly is sealed and accommodated along with an electrolytic solution, that is, a battery case.

A lithium secondary battery includes a positive electrode, a negative electrode, a separator located between the positive electrode and the negative electrode, and an electrolyte, and is divided into a lithium-ion battery (LIB), a polymer lithium-ion battery (PLIB), and so on according to which of a positive electrode active material and a negative electrode active material is used. In general, an electrode of a lithium secondary battery is formed by applying a positive electrode or negative electrode active material to a current collector such as an aluminum or copper sheet, a mesh, a film, or a foil and then drying the same.

In general, secondary batteries may be classified into cylindrical, prismatic, or pouch-type secondary batteries according to a shape of a casing in which a secondary battery cell is accommodated, and cylindrical secondary batteries may be used as a secondary battery module by connecting a plurality of secondary battery cells in series or in parallel.

Referring to Korean Patent Application Publication No. 10-2018-0072990 that is a prior document, a primary crimping mold 240 moves downward to apply a primary pressure and a secondary crimping mold 250 applies a secondary pressure to an open upper end portion 211 of a metal can 210 in which an inclination is formed, to form a crimping portion 201.

However, as a size and a thickness of a cylindrical secondary battery cell increase, when a crimping portion is formed by a crimping mold of the prior art disclosed in the prior document, load applied to the crimping mold increases and a molding error also increases.

US 4 656 736 A and CN 108 054 305 A relate to equipment associated with mechanized sealing cylindrical storage cells.

US 2009/151863 A1 elates to a manufacturing method for carrying out groove-forming processing on a battery case in the shape of a cylinder with a bottom and a groove-forming processing device.

### DISCLOSURE

### Technical Problem

The present disclosure is designed to solve the problems of the related art, and therefore the present disclosure is directed to providing a cylindrical secondary battery cell production apparatus and method for forming a crimping portion accurately without an error even when a size and a thickness of a cylindrical secondary battery cell increase.

### Technical Solution

According to an aspect of the present disclosure, an apparatus for producing a cylindrical secondary battery cell including a battery can in which an electrode assembly and an electrolytic solution are accommodated, a cap plate coupled to the battery can, and a gasket located between the battery can and the cap plate includes: a support member into which the cylindrical secondary battery cell is inserted in a state where an end portion of the battery can and an end portion of the gasket are arranged to face a preset direction and the cap plate contacts the gasket; at least one fixing member configured to fix the cylindrical secondary battery cell moved to a preset position by the support member; and a forming member located over the cylindrical secondary battery cell fixed by the fixing member and rotating and pressing the end portion of the battery can to form a crimping portion.

The gasket may be located inside the battery can and contacts the battery can, and the cap plate is located inside the gasket and contacts the gasket, wherein the forming member presses an outer side of the battery can.

The support member includes a receiving portion into which the cylindrical secondary battery cell is inserted; and a first moving portion configured to move the cylindrical secondary battery cell toward the fixing member.

An inner groove is formed along a circumference of the battery can under the gasket, wherein the fixing member is inserted into the inner groove to fix the cylindrical secondary battery cell.

The fixing member may include: a fixing protrusion formed to be inserted into the inner groove; and a second moving portion coupled to the fixing protrusion to move the fixing protrusion.

The forming member may include: a support holder contacting the cap plate; a rotating plate rotatably coupled to the support holder, and rotating about the support holder; and a forming roller coupled to the rotating plate, rotating along with the rotating plate, and pressing the end portion of the battery can to form the crimping portion.

A pair of forming rollers may be provided around the support holder, and may be coupled to the rotating plate at a position spaced apart from center of the rotating plate.

The forming roller may include: a connection rod coupled to the rotating plate; and a pressing rod coupled to the connection rod, located around the support holder, and pressing the end portion of the battery can.

The pressing rod may include: a rotating shaft coupled to the connection rod; and a roller member coupled to the rotating shaft.

An inclined portion may be formed on a portion of the roller member contacting the end portion of the battery can.

The forming member may be formed of a metal material.

According to another aspect of the present disclosure, a method of producing a cylindrical secondary battery cell including a battery can in which an electrode assembly and an electrolytic solution are accommodated, a cap plate coupled to an upper side of the battery can, and a gasket located between the battery can and the cap plate includes: inserting the cylindrical secondary battery cell into a support member in a state where an end portion of the battery can and an end portion of the gasket are arranged to face a preset direction and the cap plate contacts the gasket; fixing, by a fixing member, the cylindrical secondary battery cell moved to a preset position by the support member; and forming a crimping portion by causing a forming member to be located over the cylindrical secondary battery cell fixed by the fixing member and to rotate and press the end portion of the battery can.

The forming by pressing the end portion of the battery can may include causing a forming roller to be coupled to a rotating plate and to rotate along with the rotating plate to press the end portion of the battery can.

### Advantageous Effects

According to embodiments of the present disclosure, a crimping portion may be formed accurately without an error even when a size and a thickness of a cylindrical secondary battery cell increase.

### DESCRIPTION OF DRAWINGS

FIG. 1 is a view illustrating a cylindrical secondary battery cell of an embodiment before being formed by a cylindrical secondary battery cell production apparatus according to an embodiment of the present disclosure.
FIG. 2 is a view illustrating a cylindrical secondary battery cell of another embodiment before being formed by a cylindrical secondary battery cell production apparatus according to an embodiment of the present disclosure.
FIG. 3 is a view illustrating a state where a cylindrical secondary battery cell is inserted into a support member in a cylindrical secondary battery cell production apparatus according to an embodiment of the present disclosure.
FIG. 4 is a view illustrating a state where the support member of FIG. 3 is lifted and a forming member is partially lowered.
FIG. 5 is a view illustrating a state where a fixing member of FIG. 4 is used to fix a cylindrical secondary battery cell.
FIG. 6 is a view illustrating a state where the forming member of FIG. 5 is completely lowered to rotate and press an end portion of a bottom can of a cylindrical secondary battery cell, to form a crimping portion.
FIG. 7 is a view illustrating a state where forming of the crimping portion of the cylindrical secondary battery cell of FIG. 6 is completed and then the forming member is partially lifted.
FIG. 8 is a view illustrating a state where the forming member of FIG. 7 is completely lifted, the fixing member is separated from the cylindrical secondary battery cell, and the support member is lowered.
FIG. 9 is a view illustrating a state where the cylindrical secondary battery cell of FIG. 1 is formed by a cylindrical secondary battery cell production apparatus according to an embodiment of the present disclosure.
FIG. 10 is a view illustrating a state where the cylindrical secondary battery cell of FIG. 2 is formed by a cylindrical secondary battery cell production apparatus according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

The size of each element or a specific portion of the element shown in the drawings may be exaggerated, omitted or schematically drawn for the purpose of convenience and clarity of explanation. Accordingly, the size of each element may not substantially reflect its actual size. While describing the present disclosure, detailed descriptions of related well-known functions or configurations that may blur the points of the present disclosure are omitted.

Also, in the present specification, it will be understood that when elements are "connected" or "coupled" to each other, the elements may be directly connected or coupled to each other, or may be indirectly connected or coupled to each other with an intervening element therebetween.

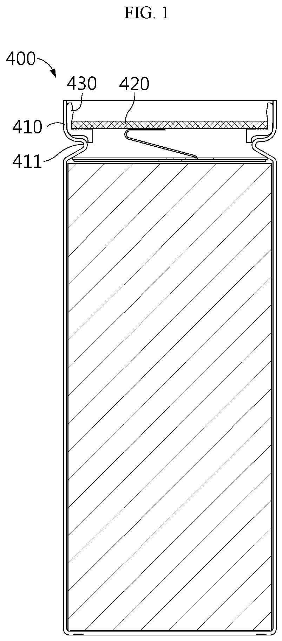

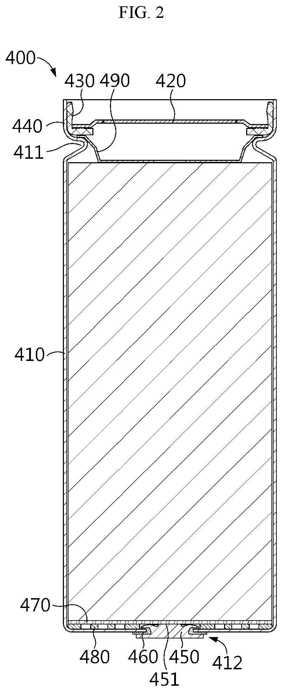

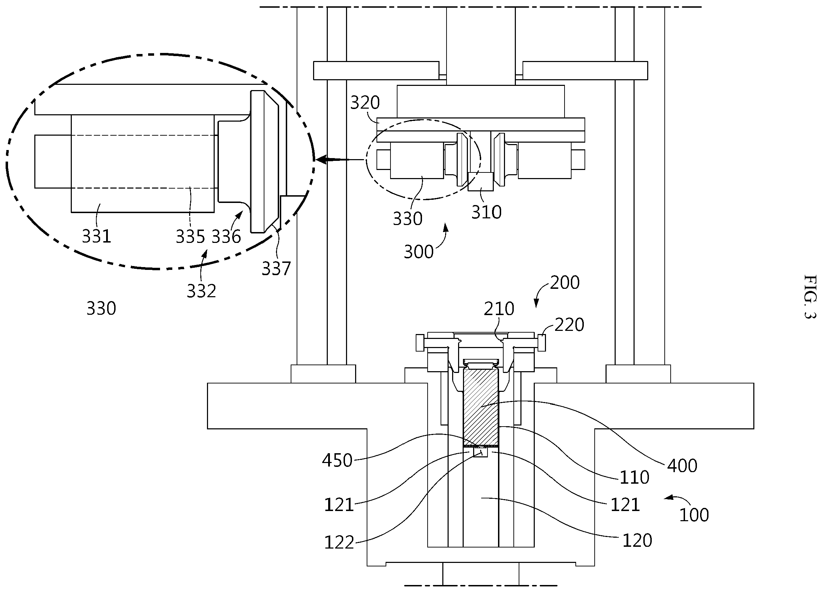

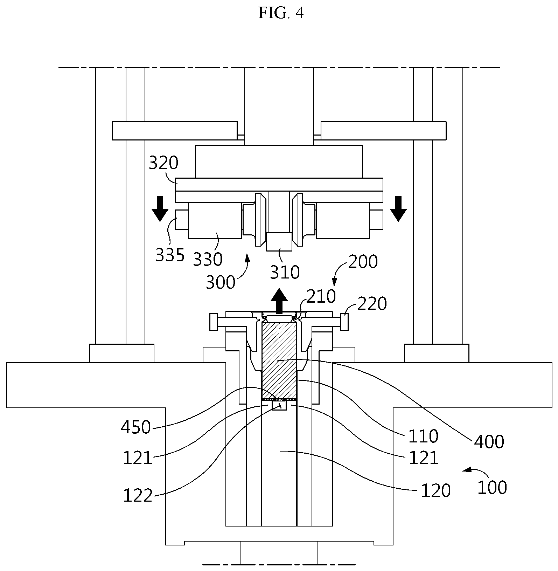

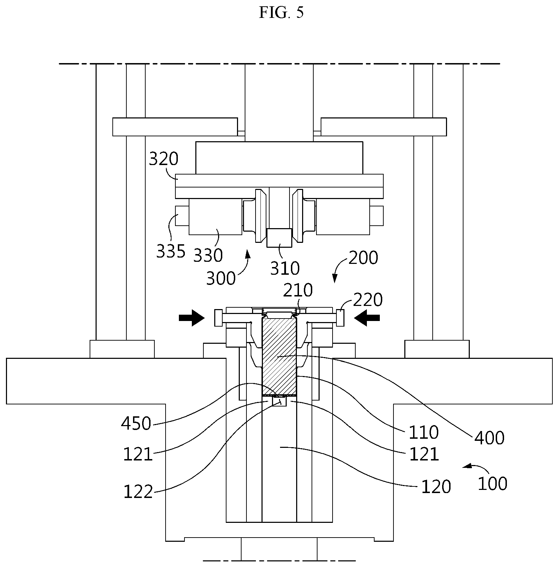

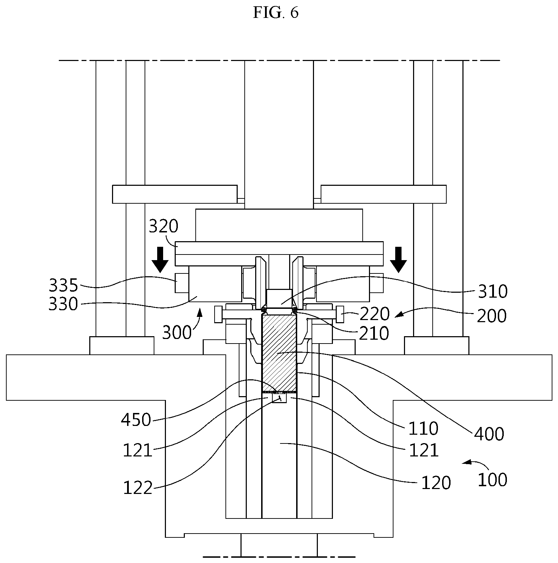

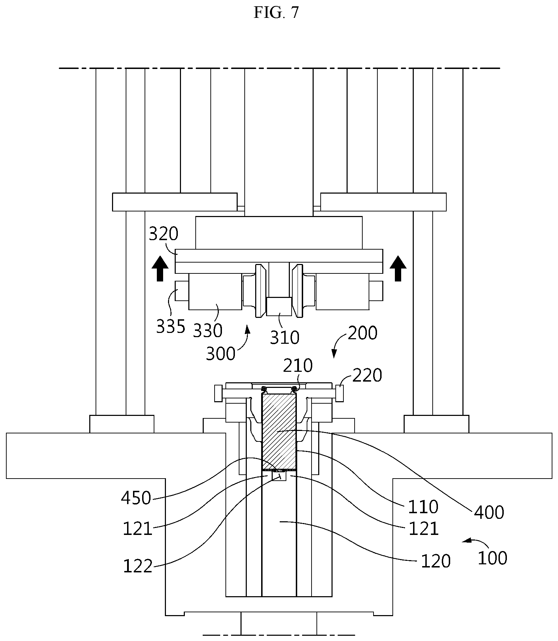

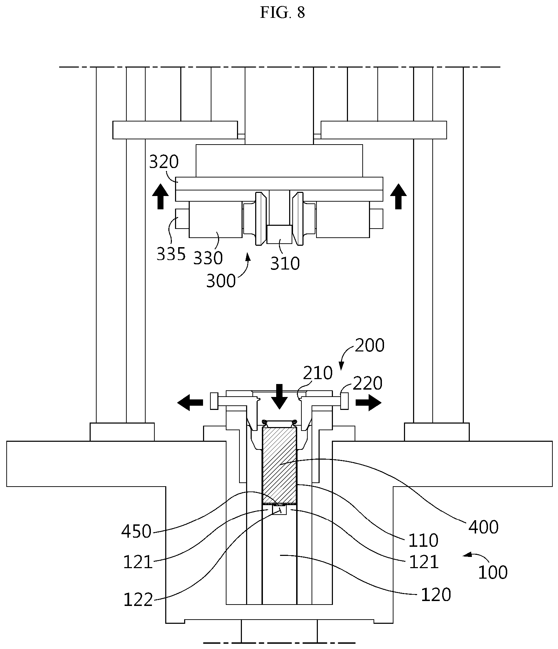

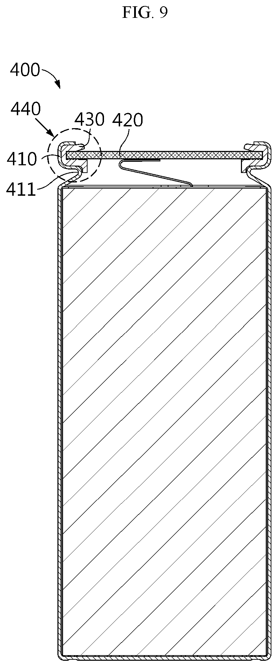

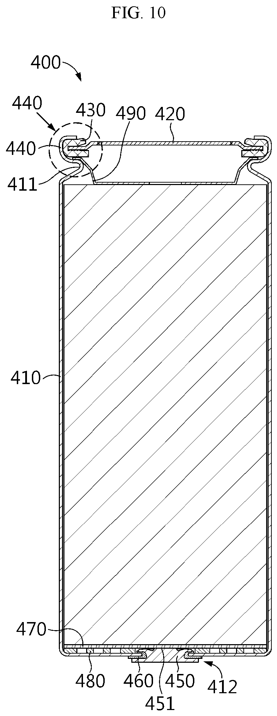

FIG. 1 is a view illustrating a cylindrical secondary battery cell of an embodiment before being formed by a cylindrical secondary battery cell production apparatus according to an embodiment of the present disclosure. FIG. 2 is a view illustrating a cylindrical secondary battery cell of another embodiment before being formed by a cylindrical secondary battery cell production apparatus according to an embodiment of the present disclosure. FIG. 3 is a view illustrating a state where a cylindrical secondary battery cell is inserted into a support member in a cylindrical secondary battery cell production apparatus according to an embodiment of the present disclosure. FIG. 4 is a view illustrating a state where the support member of FIG. 3 is lifted and a forming member is partially lowered. FIG. 5 is a view illustrating a state where a fixing member of FIG. 4 is used to fix a cylindrical secondary battery cell. FIG. 6 is a view illustrating a state where the forming member of FIG. 5 is completely lowered to rotate and press an end portion of a bottom can of a cylindrical secondary battery cell, to form a crimping portion. FIG. 7 is a view illustrating a state where forming of the crimping portion of the cylindrical secondary battery cell of FIG. 6 is completed and then the forming member is partially lifted. FIG. 8 is a view illustrating a state where the forming member of FIG. 7 is completely lifted, the fixing member is separated from the cylindrical secondary battery cell, and the support member is lowered. FIG. 9 is a view illustrating a state where the cylindrical secondary battery cell of FIG. 1 is formed by a cylindrical secondary battery cell production apparatus according to an embodiment of the present disclosure. FIG. 10 is a view illustrating a state where the cylindrical secondary battery cell of FIG. 2 is formed by a cylindrical secondary battery cell production apparatus according to an embodiment of the present disclosure.

Referring to FIGS. 1 and 9, a cylindrical secondary battery cell 400 includes a battery can 410 in which an electrode assembly and an electrolytic solution are accommodated, a cap plate 420 coupled to the battery can 410, and a gasket 430 located between the battery can 410 and the cap plate 420.

In a state where the gasket 430 is located between the battery can 410 and the cap plate 420 as shown in FIG. 1, an end portion of the battery can 410 and an end portion of the gasket 430 may be bent together for form a crimping portion 440 as shown in FIG. 9, and thus, the cylindrical secondary battery cell 400 may be sealed.

Referring to FIG. 1, an inner groove 411 is formed along a circumference of the battery can 410 of the cylindrical secondary battery cell 400 under the gasket 430.

The cylindrical secondary battery cell 400 of FIGS. 2 and 10 is a modified embodiment of the cylindrical secondary battery cell 400 of FIGS. 1 and 9. Referring to FIGS. 2 and 10, a positive electrode terminal 450 is formed opposite to the crimping portion 440.

Referring to FIGS. 2 and 10, the positive electrode terminal 450 may include a terminal inserting portion 451. The terminal inserting portion 451 may be inserted into the battery can 410 through a through-hole formed in a closed portion 412 of the battery can 410 and a lower end portion may be electrically connected to a central portion of a current collecting plate 470. The electrical connection may be made by welding. Examples of the welding may include laser welding, ultrasonic welding, and resistance welding.

The terminal inserting portion 451 may be coupled to the current collecting plate 470 by simultaneously passing through the battery can 410 and an insulator 480. While a lower edge portion of the terminal inserting portion 451 is pressed by a caulking jig, the positive electrode terminal 450 may be riveted toward an inner surface of an upper end portion of the battery can 410 to be firmly fixed to the through-hole.

That is, a lower peripheral end portion of the terminal inserting portion 451 may be bent toward an inner surface of the battery can 410 due to the application of the caulking jig. To this end, a maximum width of an end portion of the terminal inserting portion 451 may be greater than a maximum width of a hole of the battery can 410 formed through the penetration of the terminal inserting portion 451.

A riveting structure of the positive electrode terminal 420 may include the battery can 410 having a cylindrical shape with an open side, the positive electrode terminal 450 riveted through the through-hole formed in the bottom of the battery can 410, and a rivet gasket 460 located between the positive electrode terminal 450 and the through-hole.

The rivet gasket 460 may be formed of an insulating or elastic polymer resin. In an example, the rivet gasket 460 may be formed of, but is not limited to, polypropylene, polybutylene terephthalate, or polyfluorinated ethylene.

In another embodiment, the terminal inserting portion 451 may not be bent toward the inner surface of the battery can 410. For example, the terminal inserting portion 451 may have a substantially cylindrical shape passing through a hole formed at a substantially central portion of a top surface of the battery can 410.

The terminal inserting portion 451 may have, but is not limited to, a circular planar shape. The terminal inserting portion 451 may selectively have a polygonal shape, a star shape, or a shape having a leg extending from the center.

The terminal inserting portion 451 of the positive electrode terminal 450 may pass through a central hole of the insulator 480. A diameter of the central hole of the insulator 480 may be equal to or greater than a diameter of the terminal inserting portion 451. The terminal inserting portion 451 of the positive electrode terminal 450 may pass through the central hole of the insulator 480 and may be electrically coupled to the current collecting plate 470.

The insulator 480 is located between the battery can 410 and an electrode assembly, or between the battery can 410 and the current collecting plate 470 over the electrode assembly.

The crimping portion 440 and the inner groove 411 corresponding to a beading portion may be formed in the battery can 410. The inner groove 411 is formed by press-fitting inward an outer circumferential surface of the battery can 410.

The inner groove 411 may support the electrode assembly so that the electrode assembly having a size substantially corresponding to a width of the battery can 410 is not separated from the battery can 410, and may also function as a support on which the cap plate 420 is seated. Also, the inner groove 411 supports an outer circumferential surface of the gasket 430.

Referring to FIG. 10, the crimping portion 440 extends to the inside of the battery can 410 and is bent to surround and fix an edge of the cap plate 420 along with the gasket 430. The crimping portion 440 may be formed opposite to the positive electrode terminal 450 with respect to an arrangement state of the battery can 410.

A lower current collecting plate 490 is coupled to a lower portion of the electrode assembly. The lower current collecting plate 490 is formed of a conductive metal material such as aluminum, steel, copper, or nickel, and is electrically connected to the battery can 410. To this end, at least a part of an edge portion of the lower current collecting plate 490 may be located and fixed between the inner surface of the battery can 410 and the gasket 430.

In an embodiment, at least a part of an edge portion of the lower current collecting plate 490 may be welded to a portion of the inner groove 411 while being supported on a lower surface of the portion of the inner groove 411 formed in the battery can 410. In a modified embodiment, at least a part of an edge portion of the lower current collecting plate 490 may be directly welded to an inner wall surface of the battery can 410.

In a cylindrical secondary battery cell production apparatus 10 according to an embodiment of the present disclosure, an end portion of the battery can 410 and an end portion of the gasket 430 are formed together to form the crimping portion 440, so that the cylindrical secondary battery cell 400 of FIG. 1 or the cylindrical secondary battery cell 400 of FIG. 2 is sealed.

Referring to the drawings, the cylindrical secondary battery cell production apparatus 10 according to an embodiment of the present disclosure includes a support member 100, a fixing member 200, and a forming member 300. Although the cylindrical secondary battery cell 400 of FIG. 2 is inserted and formed in FIGS. 3 through 8, the cylindrical secondary battery cell 400 of FIG. 1 may also be produced by the cylindrical secondary battery cell production apparatus 10 according to an embodiment of the present disclosure.

The cylindrical secondary battery cell 400 is inserted into the support member 100. The cylindrical secondary battery cell 400 is inserted into the support member 100 in a state where, as shown in FIG. 2, an end portion of the battery can 410 and an end portion of the gasket 430 may be arranged to face a preset direction, for example, to face upward, and the cap plate 420 contacts the gasket 430. The gasket 430 is located inside the battery can 410 and contacts the battery can 410, and the cap plate 420 is located inside the gasket 430 and contacts the gasket 430.

The cylindrical secondary battery cell 400 before the crimping portion 440 is formed is inserted into the support member 100.

The support member 100 includes a receiving portion 110 and a first moving portion 120. An inner space is formed in the receiving portion 110, and the cylindrical secondary battery cell 400 is inserted into the inner space. The first moving portion 120 is provided to move the cylindrical secondary battery cell 400 toward the fixing member 200. Referring to FIGS. 3 and 4, for example, the first moving portion 120 may move the cylindrical secondary battery cell 400 upward. The first moving portion 120 may include any of various motors or a hydraulic pump.

A pair of protrusions 121 may be formed on both end portions of the first moving portion 120, and a preset space 122 may be formed between the pair of protrusions 121. The positive electrode terminal 450 of the cylindrical secondary battery cell 400 of FIG. 2 may be inserted into the space 122. As such, when the positive electrode terminal 450 is inserted into the space 122, interference between the positive electrode terminal 450 and the first moving portion 120 may be prevented, and because the positive electrode terminal 450 is not pressed by the first moving portion 120, damage to the positive electrode terminal 450 may be prevented.

The fixing member 200 fixes the cylindrical secondary battery cell 400 moved to a preset position, for example, is lifted as shown in FIGS. 4 and 5, by the support member 100.

The fixing member 200 is inserted into the inner groove 411 of the battery can 410 to fix the cylindrical secondary battery cell 400. One or more fixing members 200 may be provided, and for example, four fixing members 200 may be provided to press and fix four portions of the inner groove 411 of the battery can 410.

The fixing member 200 may include a fixing protrusion 210 and a second moving portion 220. The fixing protrusion 210 is formed to be inserted into the inner groove 411 of the battery can 410, and is inserted into the groove 411 of the battery can 410 to fix the cylindrical secondary battery cell 400. The second moving portion 220 is coupled to the fixing protrusion 210 to move the fixing protrusion 210. The second moving portion 220 may include any of various motors or a hydraulic pump.

Referring to FIG. 6, the forming member 300 is located over the cylindrical secondary battery cell 400 fixed by the fixing member 200, and the forming member 300 rotates and presses an end portion of the battery can 400 to form the crimping portion 440 as shown in FIG. 10 (the crimping portion 440 is formed in the same manner as in FIGS. 9 and 10). That is, when the forming member 300 rotates and presses an outer side of the battery can 410, an end portion of the battery can 410 and an end portion of the gasket 430 are bent together to form the crimping portion 440.

The forming member 300 includes a support holder 310, a rotating plate 320, and a forming roller 330.

The support holder 310 contacts the cap plate 420. Because the support holder 310 acts as a central shaft with respect to the rotating plate 320 and contacts the cap plate 420, the support holder 310 is configured not to rotate in consideration of friction with the cap plate 420.

The rotating plate 320 is rotatably coupled to the support holder 310, and rotates about the support holder 310. A bearing may be coupled between the rotating plate 320 and the support holder 310. There may be various methods of rotating the rotating plate 320 in a state where the support holder 310 is fixed. For example, gear teeth (not shown) may be formed on an outer circumferential surface of the rotating plate 320 and a motor (not shown) that may be engaged with the gear teeth (not shown) may be provided, so that the rotating plate 320 is rotated by a rotational force of the motor (not shown).

However, this is merely an example, and there may be more various methods of rotating the rotating plate 320.

The forming roller 330 is coupled to the rotating plate 320 and rotates along with the rotating plate 320, and presses an end portion of the battery can 410 to form the crimping portion 440.

Referring to FIG. 6, a pair of forming rollers 330 are provided around the support holder 310, and are coupled to the rotating plate 320 at a position spaced apart from the center of the rotating plate 320.

Referring to FIG. 3, the forming roller 330 includes a connection rod 331 and a pressing rod 332.

The connection rod 331 is coupled to the rotating plate 320 at a position spaced apart from the center of the rotating plate 320. The connection rod 331 rotates along with the rotation of the rotating plate 320.

The pressing rod 332 is coupled to the connection rod 331, is located around the support holder 310, and presses an end portion of the battery can 410. That is, the pressing rod 332 rotates along with the rotation of the connection rod 331 to form the battery can 410 and the gasket 430, thereby forming the crimping portion 440.

The pressing rod 332 may include a rotating shaft 335 and a roller member 336. The rotating shaft 335 is coupled to the connection rod 331 and rotates. The roller member 336 is coupled to the rotating shaft 335 and rotates along with the rotation of the rotating shaft 335.

When the rotating plate 320 rotates about the support holder 310, the roller member 336 may rotate along with the rotating plate 320. In this case, the roller member 336 rotates in a horizontal direction in FIG. 3.

The roller member 336 may rotate along with the rotation of the rotating shaft 335. In this case, the roller member 336 rotates in a vertical direction in FIG. 3.

That is, the roller member 336 may rotate in a horizontal direction in FIG. 3, or may rotate in a vertical direction in FIG. 3.

Referring to FIGS. 3 and 6 together, an inclined portion 337 may be formed on a portion of the roller member 336 contacting an end portion of the battery can 410. The inclined portion 337 of the roller member 336 contacts the end portion of the battery can 410 to press the battery can 410. As such, when the inclined portion 337 is formed on the roller member 336, the battery can 410 and the gasket 430 may be easily bent.

Because the forming member 300 needs rigidity for forming the battery can 410 and the gasket 430, the forming member 300 may be formed of any of various metal materials. However, a material of the forming member 300 is not limited to a metal material.

The following description of a cylindrical secondary battery cell production method according to an embodiment of the present disclosure may also be applied to the cylindrical secondary battery cell production apparatus 10 according to an embodiment of the present disclosure.

An operation and effect of the cylindrical secondary battery cell production method according to an embedment of the present disclosure will now be described with reference to the drawings. The same description as that made for the cylindrical secondary battery cell production apparatus 10 according to an embodiment of the present disclosure will be omitted.

Referring to FIG. 3, the cylindrical secondary battery cell 400 is inserted into the support member 100 in a state where, as shown in FIG. 2, an end portion of the battery can 410 and an end portion of the gasket 430 are arranged to face a preset direction, for example, to face upward, and the cap plate 420 contacts the gasket 430.

Referring to FIG. 4, the forming member 300 is lowered, and the support member 100 is lifted to a preset position, for example, a position of the fixing member 200.

Referring to FIG. 5, the fixing member 200 moves from the outside to the inside of the cylindrical secondary battery cell 400 and contacts the inner groove 411 of the battery can 410 to fix the cylindrical secondary battery cell 400.

Referring to FIG. 6, the forming member 300 is completely lowered and is located on the cylindrical secondary battery cell 400 fixed by the fixing member 200. The support holder 310 of the forming member 300 contacts the cap plate 420. The forming member 300 rotates and presses an end portion of the battery can 410, to form the crimping portion 440. That is, the forming roller 330 is coupled to the rotating plate 320 and rotates along with the rotating plate 320, to press an end portion of the battery can 410 and thus to form the crimping portion 440 as shown in FIG. 10.

Referring to FIG. 7, the forming of the crimping portion 440 is completed and the forming member 300 is lifted.

Referring to FIG. 8, the forming member 300 and the fixing member 200 return to their original positions, and the support member 100 is also lowered to its original position. In this state, the cylindrical secondary battery cell 400 is drawn out from the support member 100.

Although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims.

### INDUSTRIAL APPLICABILITY

The present disclosure relates to a cylindrical secondary battery cell production apparatus and method, and particularly, may be used in industries related to secondary batteries.

## Claims

1. An apparatus for producing a cylindrical secondary battery cell (400) comprising a battery can (410) in which an electrode assembly and an electrolytic solution are accommodated, a cap plate (420) coupled to the battery can (410), and a gasket (430) located between the battery can (410) and the cap plate (420), wherein an inner groove (411) is formed along a circumference of the battery can (410) under the gasket (430),
the apparatus comprising:
a support member (100) into which the cylindrical secondary battery cell (400) is insertable in a state where an end portion of the battery can (410) and an end portion of the gasket (430) are arranged to face a preset direction and the cap plate (420) contacts the gasket (430), wherein the support member (100) comprises a receiving portion (110) into which the cylindrical secondary battery cell (400) is insertable; and a first moving portion (120) configured to move the cylindrical secondary battery cell (400) toward a fixing member (200);
the apparatus further comprising:
the at least one fixing member (200) configured to fix the cylindrical secondary battery cell (400) moved to a preset position by the support member (100); and
a forming member (300) located over the cylindrical secondary battery cell (400) fixed by the fixing member (200) and configured for rotating and configured for pressing the end portion of the battery can (410) to form a crimping portion (440)
**characterized in that**
the fixing member (200) is configured to be inserted into the inner groove (411) to fix the cylindrical secondary battery cell (400).

2. The apparatus for producing a cylindrical secondary battery cell (400) according to claim 1, wherein the gasket (430) is located inside the battery can (410) and contacts the battery can (410), and the cap plate (420) is located inside the gasket (430) and contacts the gasket (430),
wherein the forming member (300) is configured to press an outer side of the battery can (410).

3. The apparatus for producing a cylindrical secondary battery cell (400) according claim 1, wherein
more than one fixing members (200) are provided to press and fix portions of the inner groove (411) of the battery can (410).

4. The apparatus for producing a cylindrical secondary battery cell (400) according to claim 1, wherein the fixing member (200) comprises:
a fixing protrusion (210) formed to be insertable into the inner groove (411); and
a second moving portion (220) coupled to the fixing protrusion (210) configured to move the fixing protrusion (210).

5. The apparatus for producing a cylindrical secondary battery cell (400) according to claim 1, wherein the forming member (300) comprises:
a support holder (310) configured for contacting the cap plate (420);
a rotating plate (320) rotatably coupled to the support holder (310), and configured for rotating about the support holder (310); and
a forming roller (330) coupled to the rotating plate (320), configured for rotating along with the rotating plate (320), and configured for pressing the end portion of the battery can (410) to form the crimping portion (440).

6. The apparatus for producing a cylindrical secondary battery cell (400) according to claim 5, wherein a pair of forming rollers (330) are provided around the support holder (310), and are coupled to the rotating plate (320) at a position spaced apart from center of the rotating plate (320).

7. The apparatus for producing a cylindrical secondary battery cell (400) according to claim 5, wherein the forming roller (330) comprises:
a connection rod (331) coupled to the rotating plate (320); and
a pressing rod (332) coupled to the connection rod (331), located around the support holder (310), and configured for pressing the end portion of the battery can (410).

8. The apparatus for producing a cylindrical secondary battery cell (400) according to claim 7, wherein the pressing rod (332) comprises:
a rotating shaft (335) coupled to the connection rod (331); and
a roller member (336) coupled to the rotating shaft (335).

9. The apparatus for producing a cylindrical secondary battery cell (400) according to claim 8, wherein an inclined portion (337) is formed on a portion of the roller member (336) configured for contacting the end portion of the battery can (410).

10. The apparatus for producing a cylindrical secondary battery cell (400) according to any one of claims 1 through 9, wherein the forming member (300) is formed of a metal material.

11. A method of producing a cylindrical secondary battery cell (400) comprising a battery can (410) in which an electrode assembly and an electrolytic solution are accommodated, a cap plate (420) coupled to an upper side of the battery can (410), and a gasket (430) located between the battery can (410) and the cap plate (420), wherein an inner groove (411) is formed along a circumference of the battery can (410) under the gasket (430), the method comprising:
inserting the cylindrical secondary battery cell (400) into a support member (100) in a state where an end portion of the battery can (410) and an end portion of the gasket (430) are arranged to face a preset direction and the cap plate (420) contacts the gasket (430);
fixing, by a fixing member (200), the cylindrical secondary battery cell (400) moved to a preset position by the support member (100); and
forming a crimping portion (440) by causing a forming member (300) to be located over the cylindrical secondary battery cell (400) fixed by the fixing member (200) and to rotate and press the end portion of the battery can (410),
**characterized in that**
the fixing member (200) inserted into the inner groove (411) to fix the cylindrical secondary battery cell (400).

12. The method of producing a cylindrical secondary battery cell (400) according to claim 11, wherein the forming by pressing the end portion of the battery can (410) comprises causing a forming roller (330) to be coupled to a rotating plate (320) and to rotate along with the rotating plate (320) to press the end portion of the battery can (410).

## Patentansprüche

1. Vorrichtung zum Herstellen einer zylindrischen Sekundärbatteriezelle (400), umfassend ein Batteriegehäuse (410), in dem eine Elektrodenbaugruppe und eine Elektrolytlösung untergebracht sind, eine mit dem Batteriegehäuse (410) gekoppelte Abdeckplatte (420) und eine Dichtung (430), die zwischen dem Batteriegehäuse (410) und der Abdeckplatte (420) angeordnet ist, wobei eine innere Nut (411) entlang eines Umfangs des Batteriegehäuses (410) unter der Dichtung (430) ausgebildet ist,
wobei die Vorrichtung umfasst:
ein Stützelement (100), in das die zylindrische Sekundärbatteriezelle (400) in einem Zustand einsetzbar ist, in dem ein Endabschnitt des Batteriegehäuses (410) und ein Endabschnitt der Dichtung (430) so angeordnet sind, dass sie einer voreingestellten Richtung zugewandt sind und die Abdeckplatte (420) die Dichtung (430) berührt, wobei das Stützelement (100) einen Aufnahmeabschnitt (110), in den die zylindrische Sekundärbatteriezelle (400) einsetzbar ist; und einen ersten Bewegungsabschnitt (120) umfasst, der zum Bewegen der zylindrischen Sekundärbatteriezelle (400) in Richtung eines Befestigungselements (200) ausgelegt ist;
wobei die Vorrichtung ferner umfasst:
das wenigstens eine Befestigungselement (200), das zum Befestigen der zylindrischen Sekundärbatteriezelle (400) ausgelegt ist, die durch das Stützelement (100) in eine voreingestellte Position bewegt wird; und
ein Formelement (300), das über der zylindrischen Sekundärbatteriezelle (400) angeordnet ist, die durch das Befestigungselement (200) befestigt ist, und zum Drehen ausgelegt ist und zum Drücken des Endabschnitts des Batteriegehäuses (410) ausgelegt ist, um einen Crimpabschnitt (440) zu bilden,
**dadurch gekennzeichnet, dass**
das Befestigungselement (200) zum Einsetzen in die innere Nut (411) zum Befestigen der ylindrischen Sekundärbatteriezelle (400) ausgelegt ist.

2. Vorrichtung zum Herstellen einer zylindrischen Sekundärbatteriezelle (400) nach Anspruch 1, wobei die Dichtung (430) innerhalb des Batteriegehäuses (410) angeordnet ist und das Batteriegehäuse (410) berührt, und die Abdeckplatte (420) innerhalb der Dichtung (430) angeordnet ist und die Dichtung (430) berührt,
wobei das Formelement (300) zum Drücken einer Außenseite des Batteriegehäuses (410) ausgelegt ist.

3. Vorrichtung zum Herstellen einer zylindrischen Sekundärbatteriezelle (400) nach Anspruch 1, wobei
mehr als ein Befestigungselement (200) zum Drücken und Befestigen von Abschnitten der inneren Nut (411) des Batteriegehäuses (410) vorgesehen sind.

4. Vorrichtung zum Herstellen einer zylindrischen Sekundärbatteriezelle (400) nach Anspruch 1, wobei das Befestigungselement (200) umfasst:
einen Befestigungsvorsprung (210), der zum Einsetzen in die innere Nut (411) ausgebildet ist; und
einen zweiten Bewegungsabschnitt (220), der mit dem Befestigungsvorsprung (210) gekoppelt ist und zum Bewegen des Befestigungsvorsprungs (210) ausgelegt ist.

5. Vorrichtung zum Herstellen einer zylindrischen Sekundärbatteriezelle (400) nach Anspruch 1, wobei das Formelement (300) umfasst:
einen Stützhalter (310), der zum Berühren der Abdeckplatte (420) ausgelegt ist;
eine Drehplatte (320), die drehbar mit dem Stützhalter (310) gekoppelt ist und zum Drehen um den Stützhalter (310) ausgelegt ist; und
eine Formwalze (330), die mit der Drehplatte (320) gekoppelt ist, zum Drehen zusammen mit der Drehplatte (320) ausgelegt ist und zum Drücken des Endabschnitts des Batteriegehäuses (410) ausgelegt ist, um den Crimpabschnitt (440) zu bilden.

6. Vorrichtung zum Herstellen einer zylindrischen Sekundärbatteriezelle (400) nach Anspruch 5, wobei ein Paar Formwalzen (330) um den Stützhalter (310) bereitgestellt ist und mit der Drehplatte (320) an einer Position gekoppelt ist, die von der Mitte der Drehplatte (320) beabstandet ist.

7. Vorrichtung zum Herstellen einer zylindrischen Sekundärbatteriezelle (400) nach Anspruch 5, wobei die Formwalze (330) umfasst:
eine Verbindungsstange (331), die mit der Drehplatte (320) gekoppelt ist; und
eine Druckstange (332), die mit der Verbindungsstange (331) gekoppelt ist, um den Stützhalter (310) angeordnet ist und zum Drücken des Endabschnitts des Batteriegehäuses (410) ausgelegt ist.

8. Vorrichtung zum Herstellen einer zylindrischen Sekundärbatteriezelle (400) nach Anspruch 7, wobei die Druckstange (332) umfasst:
eine Drehwelle (335), die mit der Verbindungsstange (331) gekoppelt ist; und
ein Walzenelement (336), das mit der Drehwelle (335) gekoppelt ist.

9. Vorrichtung zum Herstellen einer zylindrischen Sekundärbatteriezelle (400) nach Anspruch 8, wobei ein geneigter Abschnitt (337) an einem Abschnitt des Walzenelements (336) gebildet ist, der zum Berühren des Endabschnitts des Batteriegehäuses (410) ausgelegt ist.

10. Vorrichtung zum Herstellen einer zylindrischen Sekundärbatteriezelle (400) nach einem der Ansprüche 1 bis 9, wobei das Formelement (300) aus einem Metallmaterial gebildet ist.

11. Verfahren zum Herstellen einer zylindrischen Sekundärbatteriezelle (400), umfassend ein Batteriegehäuse (410), in dem eine Elektrodenbaugruppe und eine Elektrolytlösung untergebracht sind, eine mit einer Oberseite des Batteriegehäuses (410) gekoppelte Abdeckplatte (420) und eine Dichtung (430), die zwischen dem Batteriegehäuse (410) und der Abdeckplatte (420) angeordnet ist, wobei eine innere Nut (411) entlang eines Umfangs des Batteriegehäuses (410) unter der Dichtung (430) ausgebildet ist, wobei das Verfahren umfasst:
Einsetzen der zylindrischen Sekundärbatteriezelle (400) in ein Stützelement (100) in einem Zustand, in dem ein Endabschnitt des Batteriegehäuses (410) und ein Endabschnitt der Dichtung (430) so angeordnet sind, dass sie einer voreingestellten Richtung zugewandt sind und die Abdeckplatte (420) die Dichtung (430) berührt;
Befestigen der zylindrischen Sekundärbatteriezelle (400), die durch das Stützelement (100) in eine voreingestellte Position bewegt wird, durch ein Befestigungselement (200); und
Bilden eines Crimpabschnitts (440), indem bewirkt wird, dass ein Formelement (300) über der zylindrischen Sekundärbatteriezelle (400) angeordnet wird, die durch das Befestigungselement (200) befestigt wird, und den Endabschnitt des Batteriegehäuses (410) dreht und drückt,
**dadurch gekennzeichnet, dass**
das Befestigungselement (200) zum Befestigen der zylindrische Sekundärbatteriezelle (400) in die innere Nut (411) eingesetzt wird.

12. Verfahren zum Herstellen einer zylindrischen Sekundärbatteriezelle (400) nach Anspruch 11, wobei das Bilden durch Drücken des Endabschnitts des Batteriegehäuses (410) umfasst, dass bewirkt wird, dass eine Formwalze (330) mit einer Drehplatte (320) gekoppelt wird und sich zusammen mit der Drehplatte (320) dreht, um den Endabschnitt des Batteriegehäuses (410) zu drücken.

## Revendications

1. Appareil pour la production d'un élément de batterie secondaire cylindrique (400) comprenant un boîtier de batterie (410) dans lequel sont installés un ensemble d'électrodes et une solution électrolytique, une plaque de recouvrement (420) couplée au boîtier de batterie (410), et une garniture d'étanchéité (430) située entre le boîtier de batterie (410) et la plaque de recouvrement (420), une rainure intérieure (411) étant formée le long d'une circonférence du boîtier de batterie (410) sous la garniture d'étanchéité (430),
l'appareil comprenant :
un élément de support (100) dans lequel l'élément de batterie secondaire cylindrique (400) peut être inséré dans un état où une partie terminale du boîtier de batterie (410) et une partie terminale de la garniture d'étanchéité (430) sont agencées de façon à faire face à une direction préétablie, et la plaque de recouvrement (420) est au contact de la garniture d'étanchéité (430), l'élément de support (100) comprenant une partie réceptrice (110) dans laquelle l'élément de batterie secondaire cylindrique (400) peut être inséré ; et une première partie mobile (120) configurée pour déplacer l'élément de batterie secondaire cylindrique (400) vers un élément de fixation (200) ;
l'appareil comprenant en outre :
l'au moins un élément de fixation (200) configuré pour fixer l'élément de batterie secondaire cylindrique (400) déplacé dans une position préétablie par l'élément de support (100) ; et
un élément de formage (300) situé au-dessus de l'élément de batterie secondaire cylindrique (400) fixé par l'élément de fixation (200) et configuré pour tourner et pour presser la partie terminale du boîtier de batterie (410) afin de former une partie de sertissage (440)
**caractérisé en ce que**
l'élément de fixation (200) est configuré pour être inséré dans la rainure intérieure (411) afin de fixer l'élément de batterie secondaire cylindrique (400).

2. Appareil pour la production d'un élément de batterie secondaire cylindrique (400) selon la revendication 1, la garniture d'étanchéité (430) étant située à l'intérieur du boîtier de batterie (410) et étant au contact du boîtier de batterie (410), et la plaque de recouvrement (420) étant située à l'intérieur de la garniture d'étanchéité (430) et étant au contact de la garniture d'étanchéité (430),
l'élément de formage (300) étant configuré pour appuyer sur un côté extérieur du boîtier de batterie (410).

3. Appareil pour la production d'un élément de batterie secondaire cylindrique (400) selon la revendication 1,
plus d'un élément de fixation (200) étant agencé pour presser et fixer des parties de la rainure intérieure (411) du boîtier de batterie (410).

4. Appareil pour la production d'un élément de batterie secondaire cylindrique (400) selon la revendication 1, l'élément de fixation (200) comprenant:
une saillie de fixation (210) façonnée pour être insérable dans la rainure intérieure (411) ; et
une deuxième partie mobile (220) couplée à la saillie de fixation (210) configurée pour déplacer la saillie de fixation (210).

5. Appareil pour la production d'un élément de batterie secondaire cylindrique (400) selon la revendication 1, l'élément de formage (300) comprenant:
un porte-support (310) configuré pour se placer au contact de la plaque de recouvrement (420) ;
une plaque tournante (320) couplée de façon rotative au porte-support (310), et configurée pour tourner autour du porte-support (310) ; et
un rouleau de formage (330) couplé à la plaque tournante (320), configuré pour tourner avec la plaque tournante (320), et configuré pour presser la partie terminale du boîtier de batterie (410) pour former la partie de sertissage (440).

6. Appareil pour la production d'un l'élément de batterie secondaire cylindrique (400) selon la revendication 5, une paire de rouleaux de formage (330) étant agencés autour du porte-support (310), et couplés à la plaque tournante (320) dans une position espacée du centre de la plaque tournante (320).

7. Appareil pour la production d'un élément de batterie secondaire cylindrique (400) selon la revendication 5, l'élément de formage (330) comprenant:
une barre de raccordement (331) couplée à la plaque tournante (320) ; et
une tige de pressage (332) couplée à la barre de raccordement (331) située autour du porte-support (310), et configurée pour presser la partie terminale du boîtier de batterie (410).

8. Appareil pour la production d'un élément de batterie secondaire cylindrique (400) selon la revendication 7, la tige de pressage (332) comprenant:
un arbre de rotation (335) couplé à la barre de raccordement (331) ; et
un élément de rouleau (336) couplé à l'arbre rotatif (335).

9. Appareil pour la production d'un l'élément de batterie secondaire cylindrique (400) selon la revendication 8, une partie inclinée (337) étant formée sur une partie de l'élément de rouleau (336) configurée pour être au contact de la partie terminale du boîtier de batterie (410).

10. Appareil pour la production d'un élément de batterie secondaire cylindrique (400) selon une quelconque des revendications 1 à 9, l'élément de formage (300) étant composé d'un matériau métallique.

11. Procédé de production d'un élément de batterie secondaire cylindrique (400) comprenant un boîtier de batterie (410) dans lequel sont installés un ensemble d'électrodes et une solution électrolytique, une plaque de recouvrement (420) couplée à un côté supérieur du boîtier de batterie (410), et une garniture d'étanchéité (430) située entre le boîtier de batterie (410) et la plaque de recouvrement (420), une rainure intérieure (411) étant formée le long d'une circonférence du boîtier de batterie (410) sous la garniture d'étanchéité (430), le procédé comprenant:
l'insertion de l'élément de batterie secondaire cylindrique (400) dans un élément de support (100) dans un état où une partie terminale du boîtier de batterie (410) et une partie terminale de la garniture d'étanchéité (430) sont agencées de façon à faire face à une direction prédéfinie et la plaque de recouvrement (420) est au contact de la garniture d'étanchéité (430) ;
la fixation à l'aide d'un élément de fixation (200), de l'élément de batterie secondaire cylindrique (400) déplacé dans une position préétablie par l'élément de support (100) ; et
la formation d'un élément de sertissage (440) en causant le positionnement d'un élément de formation (300) au-dessus de l'élément de batterie secondaire cylindrique (400) fixé par l'élément de fixation (200) et pour tourner et presser la partie terminale du boîtier de batterie (410)
**caractérisé en ce que**
l'élément de fixation (200) est inséré dans la rainure intérieure (411) afin de fixer l'élément de batterie secondaire cylindrique (400).

12. Procédé de production d'un élément de batterie secondaire cylindrique (400) selon la revendication 11, le formage par pressage de la partie terminale du boîtier de batterie (410) comportant le déclenchement du couplage d'un rouleau de formage (330) à une plaque tournante (320) et la rotation avec la plaque tournante (320) pour appuyer sur la partie terminale du boîtier de batterie (410).
